# EUROPEAN PATENT SPECIFICATION

(11) **EP 1 965 216 B1**
(45) Date of publication and mention of the grant of the patent: **24.10.2018**
(21) Application number: 08003375.6
(22) Date of filing: 25.02.2008
(51) Int. Cl.: G01N 35/00

(54) **Automatic analyzer**
Automatisches Analysegerät
Analyseur automatique

(30) Priority: 28.02.2007 JP 2007048353
(43) Date of publication of application: 03.09.2008
(73) Proprietor: Hitachi High-Technologies Corporation, Tokyo 105-8717 (JP)
(72) Inventor: Nakano, Toshiro, Hitachinaka-shi Ibaraki 312-8504 (JP); Otake, Hitoshi, Hitachinaka-shi Ibaraki 312-8504 (JP)
(74) Representative: Strehl Schübel-Hopf & Partner

(56) References cited:
- US-A- 6 090 630
- US-A1- 2006 145 950
- US-B1- 6 544 476

## Description

### BACKGROUND OF THE INVENTION

### 1. Field of the Invention

The present invention relates to an automatic analyzer for performing qualitative/quantitative analysis of biological samples such as blood and urine, and more particularly to an automatic analyzer that includes a display unit for displaying information including the measurement result of biological samples.

### 2. Description of the Related Art

Automatic analyzers, which perform qualitative/quantitative analysis of specific components included in biological samples such as blood and urine, are coming into remarkably wide use mainly in large-scale hospitals, and clinical laboratory test centers, in which it is necessary to handle a large number of samples/items in a short period of time. For this reason, the high measurement precision, high repeatability, high throughput per unit time, and low running costs are required for such automatic analyzers.

In order to satisfy many user needs, for example, automatic analyzers are provided with: a mode in which the measurement result of a biological sample is printed by an actual printer in real time; and a paperless mode in which a printing image is merely displayed on a display unit without actually printing the printing image. The output mode used differs for each facility.

In addition, the automatic analyzers have various kinds of maintenance functions of maintaining the performance of the automatic analyzers. Moreover, the automatic analyzers have various kinds of real-time/batch printing functions of printing the result of executed maintenance, a situation of a reagent used for analysis, the result of calibration, precision control data, and the like, if necessary. The print output results are summarized, and are then displayed in time series as a printing image on a result display screen.

Incidentally, for example, an automatic analyzer as disclosed in JP-A-8-211064 is known as this kind of automatic analyzer.
US 6 544 476 B1 describes an automatic analyzer with the features in the preamble of present claim 1.

### SUMMARY OF THE INVENTION

The conventional automatic analyzer displays various kinds of output results, which are acquired by the automatic analyzer, in time series as one printing image. Therefore, in the present situation, it is not possible to know the result included in each page without actual browsing of each page in succession.

Accordingly, the output result targeted by a user may be acquired based on the paging operation of the user, which causes a hindrance to quick operation required in the clinical laboratory test.

In addition, for the data verification/confirm of the measurement result, the user prints the targeted output result from a result output screen to paper for printing, and then confirms/verifies the measurement result of each sample on the printing paper. Accordingly, in the present situation, the user is forced to input a check indicating whether or not the measurement result has been checked, and a comment if necessary, and then the user files and saves the print if necessary.

An object of the present invention is to provide an automatic analyzer that is capable of decreasing a load placed on a user who confirms/verifies the measurement result of biological samples, the maintenance execution result, and the like, and that enables the quick clinical laboratory test operation.

In order to achieve the above-described object, the present invention provides the analyzer defined in claim 1. Disclosed is an automatic analyzer for analyzing a biological sample, the automatic analyzer comprising: a display unit for displaying a list of pieces of information including measurement results of the biological sample; and control means for performing control so that, on each piece of information including the measurement results of the biological sample, information as to when and who has executed verification/confirmation of data can be displayed on the display unit.

In addition, an automatic analyzer may also be provided with a function of enabling a user to add a check indicating whether or not the user has checked the result, the check date, a checker, a comment, and the like, to the measurement result of each biological sample, and the like, on a display unit including a print result screen for displaying the measurement result of the biological sample as a time-series printing image, the measurement result being output by the automatic analyzer.

Moreover, the automatic analyzer may also be provided with various functions based on selection of the output result targeted by a user from among all printed results output by the automatic analyzer, on a display unit that includes a screen for displaying a list including a title of printing, the date and time of printing, an operator ID, a range of page, and user's check indicating whether or not the user has checked the measurement result. Examples of the various functions include a function of proceeding to a start page of the targeted output result so that the targeted output result is displayed; a function of extracting only the output result targeted by the user so that the targeted output result is displayed; a function of printing only the output result targeted by the user on printing paper by a printer; and a function of enabling a user to save only the output result targeted by the user in an outside medium as a printing image by an external storage device.

Furthermore, the automatic analyzer may also be provided with a function of, by selecting and registering only print results required for a user among all printed results output by the automatic analyzer, enabling the user to display only a list of the selected print results so that it is easier for the user to search for the print results targeted by the user.

According to the present invention, a user can easily display a targeted result display screen, and can perform on a screen all confirmation/verification work of the measurement result acquired up to that time. In addition, it is also possible to print the check result displayed on the screen just as it is, or to save the check result in an outside medium just as it is, if necessary. Therefore, it is expected that an improvement in work efficiency can be achieved.

### Brief Description of the Drawings

Fig. 1 is a diagram schematically illustrating an overall configuration of an automatic analyzer;
Fig. 2 is a diagram illustrating a print result screen, and a menu screen that is displayed from the print result screen;
Fig. 3 is a diagram illustrating a print result screen on which the measurement result of biological samples is displayed;
Fig. 4 is a diagram illustrating a processing method for achieving the present invention; and
Fig. 5 is a diagram illustrating a menu setting screen that is displayed from a print result menu screen.

### DETAILED DESCRIPTION OF THE PREFERRED EMBODIMENTS

Embodiments of the present invention will be described with reference to accompanying drawings as below.

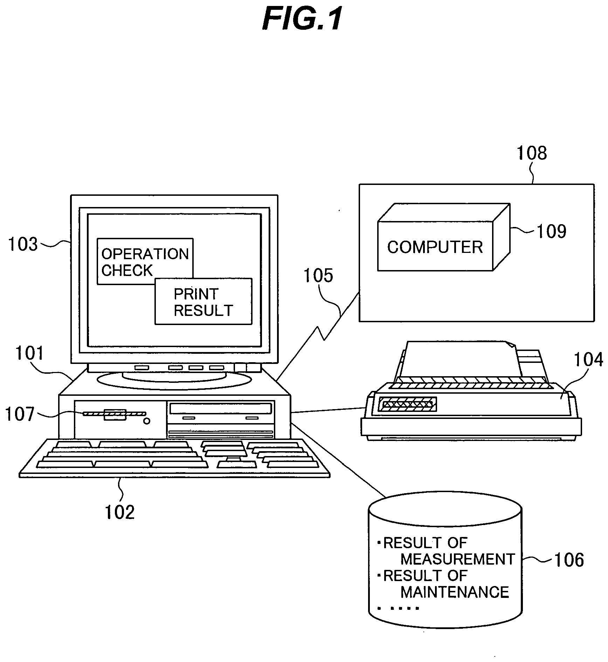

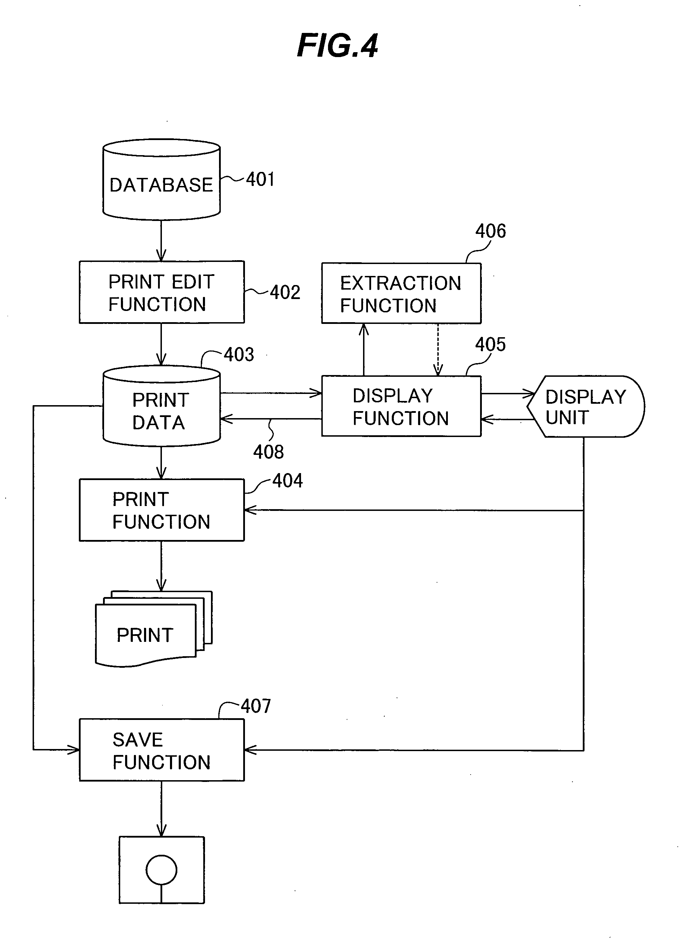

Fig. 1 is a diagram schematically illustrating a configuration of an automatic analyzer. Fig. 4 is a diagram illustrating a processing method for achieving the present invention.

In Fig. 1, reference numeral 101 denotes an operation unit. The operation unit is a computer that is equipped with peripheral devices including: a keyboard 102 for inputting data; a display unit 103 for displaying data; a printer 104 for printing data; an interface 105 through which a connection to an analyzing unit is made; an internal storage device 106 for storing data; and an external storage device 107 for storing data.

Reference numeral 108 denotes one or more analyzing units. The analyzing unit 108 is connected to the operation unit 101 through the interface 105. The analyzing unit 108 executes measurements of biological samples, the maintenance operation, and the like, according to an operation instruction received from the display unit 103. The execution operation is totally controlled by the computer 109.

The result of the executed measurements of the biological samples, the result of the executed maintenance, and the like, are stored in the storage device 106 of the operation unit 101 through the interface 105. In addition, the measurement result and the maintenance execution result are edited in an actual print format to form print data 403 (a print edit function 402 shown in Fig. 4). The print data 403 is then displayed on the display unit 103, or printed by the printer 104 (a print function 404).

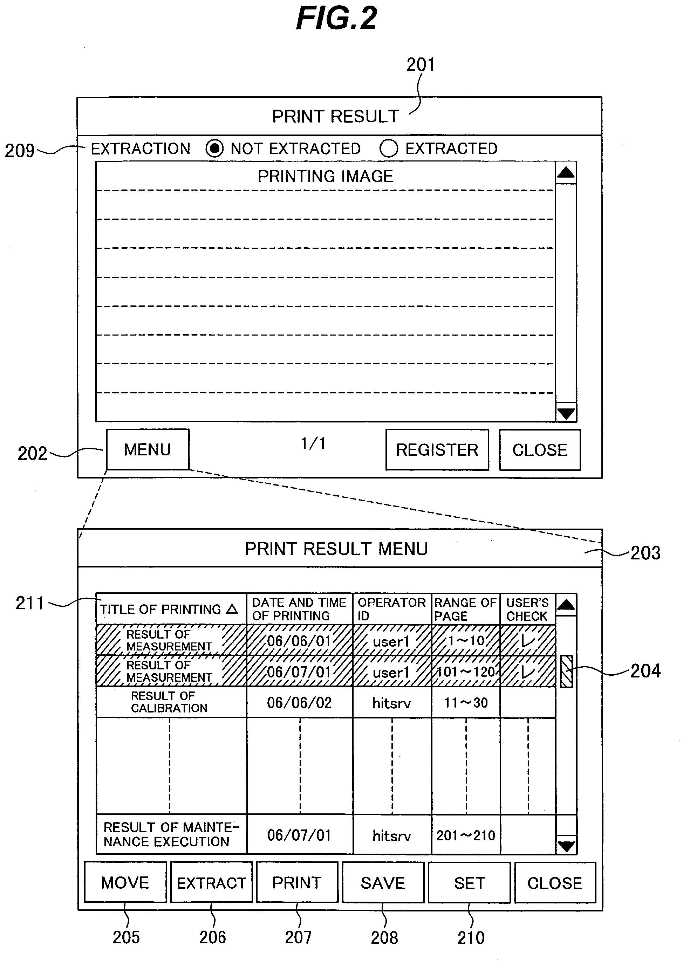

Fig. 2 is a diagram illustrating a print result screen, and a menu screen that is displayed from the print result screen.

The print result screen 201 displays the measurement result of the biological samples, the maintenance execution result, and the like, as a time-series printing image. In addition, a print result menu screen 203, which is displayed by pressing a menu button 202 of the print result screen 201, displays a list (a display function 405) including all of the printed results output by the automatic analyzer. For example, the displayed list includes a title of printing, the date and time of printing, an operator ID, a range of page, and a user's check indicating whether or not a user has checked the result.

In the course of creating print data 403 from a database 401 stored in the storage device 106, each print data about the title of printing, the date and time of printing, and the range of page is successively collated, followed by being stored in a database as list information.

On the print result menu screen 203, a user is allowed to select a plurality of target print results (reference numeral 204). For the selected print results, the user can execute each function by pressing each corresponding button of "Move" 205, "Extract" 206, "Print" 207, or "Save" 208.

In addition, the list displayed on the menu screen can be collated by sorting the fields of the title of printing, the date and time of printing, the operator ID, the range of page, and the user's check (reference numeral 211) .

When the "Move" button 205 is pressed, the print result menu screen 203 is closed, and then a start page of the print result selected by the user is displayed on the print result screen 201.

When the "Extract" button 206 is pressed, the print result menu screen 203 is closed, and then the print result screen 201 is displayed with only the print result selected by the user to be extracted (an extraction function 406). Incidentally, in this case, an extraction radio button 209 of the print result screen 201 is switched to "extracted". If the screen is returned to a screen with no extraction, the extraction radio button 209 is switched to "not extracted".

When the "Print" button 207 is pressed, only the print result selected by the user is printed on printing paper by the printer 104 (the print function 404).

When the "Save" button 208 is pressed, only the print result selected by the user is saved in an outside medium as a printing image by the external storage device 107 (a save function 407).

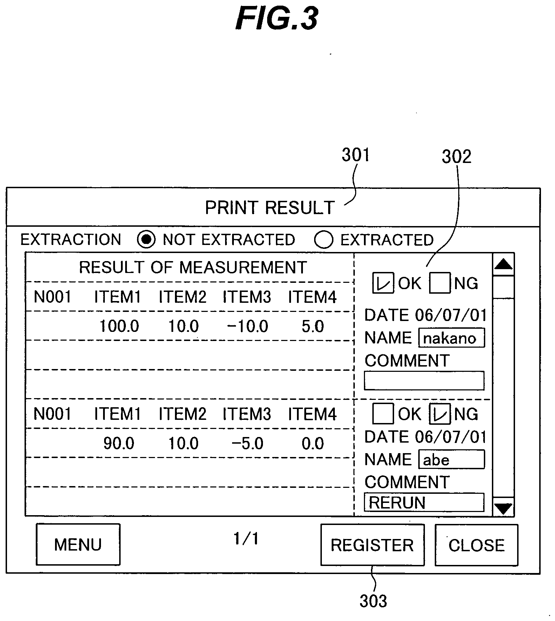

Fig. 3 is a diagram illustrating a print result screen 301 on which the measurement result of biological samples is displayed through the operation from the print result menu screen 203.

An area 302 is displayed on the print result screen 301 together with the actual measurement result. The area 302 is used to input a check mark indicating whether or not data has been checked, the check date, a checker, a comment, and the like.

When a user inputs data into the area 302, the color of a "Register" button 303 changes to prompt the user to register the data. When the "Register" button 303 is pressed, the data, which has been inputted by the user up to this time, is collectively registered (reference numeral 408). Then, the color of the "Register" button is returned. As a result of this operation, the print result in question is displayed as "checked" on the print result menu screen 203.

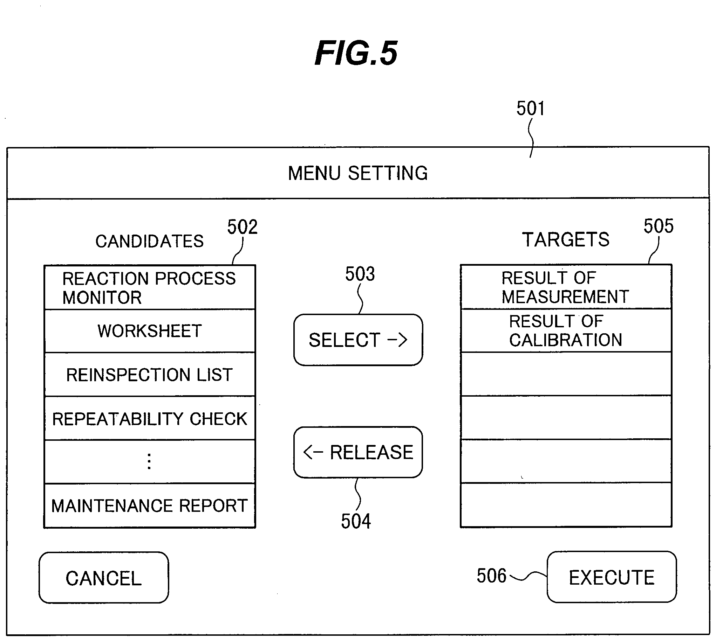

Fig. 5 is a diagram illustrating a menu setting screen that is displayed by pressing a "Set" button 210 of the print result menu screen shown in Fig. 2.

On the menu setting screen 501, print items are displayed in a candidate list 502. An arbitrary print item is moved to a print target list 505 by use of a "Select" button 503. On the other hand, an arbitrary print item included in the print target list 505 is excluded from the print target list 505 by use of a "Release" button 504. In actuality, the operation of selection/cancel causes the color of a "Return" button 506 to change and then pressing the "Return" button 506 closes the menu setting screen 501. Then, the print result menu screen 203 displays only the print items selected on the menu setting screen 501.

## Claims

1. An automatic analyzer for analyzing a biological sample, said automatic analyzer comprising:
a storage device (106) for storing information including measurement results of the biological sample,
a display unit (103) for displaying a list of pieces of said information; and
control means (101) adapted to perform control so that a print result screen (201, 301) displaying the measurement results of the biological samples is caused to be displayed on the display unit (103),
**characterized in that** said control means (101) is adapted to perform control so that the following is caused to be displayed on the display unit (103):
the print result screen (201, 301) with results of maintenance execution as a time-series printing image,
a print result menu screen (203) with a list (211) including at least the title of printings, and the date and time of printings in all of the printed results output by the automatic analyzer,
the print result screen (201, 301) with a start page of a print result selected by a user to be moved, or with only the print result selected by the user to be extracted, while displaying on the measurement results of the biological sample also checker information as to whether, when and by whom verification/confirmation of data has been executed,
an input area (302) on the print result screen (201, 301) displaying together with the selected print result said checker information for allowing the user to input a check mark indicating whether or not data has been checked, and
a register button (303) on the print result screen (201, 301) for collectively registering the information displayed on the input area (302) when being pressed by the user.

2. The automatic analyzer of claim 1, wherein the list (211) displayed on the print result menu screen (203) further includes said check mark for each measurement result, and the results of maintenance execution.

3. The automatic analyzer of claim 1 or 2, wherein said control means (101) is adapted to change the colour of the register button (303), when the user has input data into the input area (302), and to let the register button (303) return to its previous colour after the register button (303) has been pressed and the data, which has been inputted by the user up to this time, has been collectively registered.

4. The automatic analyzer of any preceding claim, wherein said checker information displayed in said input area (302) on the print result screen (201, 301) together with the selected print result further allows the user to input the check date and a checker name.

## Patentansprüche

1. Automatisches Analysegerät zum Analysieren einer biologischen Probe, wobei das automatische Analysegerät aufweist:
eine Speichervorrichtung (106) zum Speichern von Information, die Messergebnisse der biologischen Probe enthält,
eine Anzeigeeinheit (103) zum Anzeigen einer Liste von Einheiten der Information und
eine Steuereinrichtung (101), die dazu ausgelegt ist, eine Steuerung derart durchzuführen, dass ein die Messergebnisse der biologischen Proben anzeigender Druckergebnisschirm (201, 301) zur Anzeige auf der Anzeigeeinheit (103) gebracht wird,
**dadurch gekennzeichnet, dass** die Steuereinrichtung (101) dazu ausgelegt ist, eine Steuerung derart durchzuführen, dass Folgendes zur Anzeige auf der Anzeigeeinheit (103) gebracht wird:
der Druckergebnisschirm (201, 301) mit Ergebnissen der Wartungsausführung als ein zeitabhängiges Druckbild,
ein Druckergebnismenüschirm (203) mit einer Liste (211), die wenigstens den Titel von Ausdrucken und das Datum und die Uhrzeit von Ausdrucken in allen durch das automatische Analysegerät gedruckten Ausgabeergebnissen enthält,
der Druckergebnisschirm (201, 301) mit einer Startseite eines durch einen Benutzer zur Bewegung ausgewählten Druckergebnisses, oder mit nur dem durch den Benutzer zur Extraktion ausgewähltem Druckergebnis, während auf den Messergebnissen der biologischen Probe auch Prüfinformation angezeigt wird, ob, wann und durch wen eine Verifikation/Bestätigung von Daten ausgeführt wurde,
ein Eingabebereich (302) auf dem Druckergebnisschirm (201, 301), der zusammen mit dem ausgewählten Druckergebnis die Prüfinformation anzeigt, um dem Benutzer die Eingabe eines Prüfzeichens zu erlauben, das anzeigt, ob Daten geprüft wurden oder nicht, und
eine Registriertaste (303) auf dem Druckergebnisschirm (201, 301), um bei Betätigung durch den Benutzer die in dem Eingabebereich (302) angezeigte Information kollektiv zu registrieren.

2. Automatisches Analysegerät nach Anspruch 1, wobei die auf dem Druckergebnismenüschirm (203) angezeigte Liste (211) ferner das Prüfzeichen für jedes Messergebnis und die Ergebnisse der Wartungsausführung enthält.

3. Automatisches Analysegerät nach Anspruch 1 oder 2, wobei die Steuereinrichtung (101) dazu ausgelegt ist, die Farbe der Registriertaste (303) zu ändern, wenn der Benutzer Daten in den Eingabebereich (302) eingegeben hat, und die Registriertaste (303) zu ihrer vorigen Farbe zurückkehren zu lassen, nachdem die Registriertaste (303) betätigt wurde und die Daten, die durch den Benutzer bis zu dieser Zeit eingegeben wurden, kollektiv registriert wurden.

4. Automatisches Analysegerät nach einem der vorstehenden Ansprüche, wobei die in dem Eingabebereich (302) auf dem Druckergebnisschirm (201, 301) zusammen mit dem ausgewählten Druckergebnis angezeigte Prüfinformation es dem Benutzer ferner erlaubt, das Prüfdatum und einen Prüfernamen einzugeben.

## Revendications

1. Analyseur automatique pour analyser un échantillon biologique, ledit analyseur automatique comprenant :
un dispositif (106) de stockage pour stocker des informations incluant des résultats de mesure de l'échantillon biologique,
une unité (103) d'affichage pour afficher une liste d'éléments desdites informations ; et
un moyen (101) de commande adapté à exécuter une commande de manière à ce qu'un écran (201, 301) de résultat d'impression affichant les résultats de mesure des échantillons biologiques soit affiché sur l'unité (103) d'affichage,
**caractérisé en ce que** ledit moyen (101) de commande est adapté à exécuter une commande de manière à ce qui suit soit affiché sur l'unité (103) d'affichage :
l'écran (201, 301) de résultat d'impression avec des résultats d'exécution de maintenance comme une image d'impression chronologique,
un écran (203) de menu de résultat d'impression avec une liste (211) incluant au moins le titre d'impressions, et la date et l'heure d'impressions dans la totalité des résultats imprimés délivrés en sortie par l'analyseur automatique,
l'écran (201, 301) de résultat d'impression avec une page de début d'un résultat d'impression sélectionné par un utilisateur devant être déplacé, ou avec uniquement le résultat d'impression sélectionné par l'utilisateur devant être extrait, tout en affichant sur les résultats de mesure de l'échantillon biologique également une information de vérificateur quant à savoir si, quand et par qui une vérification/confirmation de données a été exécutée,
une zone (302) d'entrée sur l'écran (201, 301) de résultat d'impression affichant ensemble avec le résultat d'impression sélectionné ladite information de vérificateur pour permettre à l'utilisateur d'entrer une marque de vérification indiquant si des données ont été ou non vérifiées, et
un bouton (303) d'enregistrement sur l'écran (201, 301) de résultat d'impression pour collectivement enregistrer les informations affichées sur la zone (302) d'entrée lorsque celui-ci est pressé par l'utilisateur.

2. Analyseur automatique selon la revendication 1, dans lequel la liste (211) affichée sur l'écran (203) de menu de résultat d'impression inclut en outre ladite marque de vérification pour chaque résultat de mesure, et les résultats d'exécution de maintenance.

3. Analyseur automatique selon la revendication 1 ou 2, dans lequel ledit moyen (101) de commande est adapté à changer la couleur du bouton (303) d'enregistrement, lorsque l'utilisateur a entré des données dans la zone (302) d'entrée, et à laisser le bouton (303) d'enregistrement revenir à sa couleur précédente après que le bouton (303) d'enregistrement a été pressé et que les données, qui ont été entrées par l'utilisateur jusqu'à cet instant, ont été collectivement enregistrées.

4. Analyseur automatique selon une quelconque revendication précédente, dans lequel ladite information de vérificateur affichée dans ladite zone (302) d'entrée sur l'écran (201, 301) de résultat d'impression ensemble avec le résultat d'impression sélectionné permet en outre à l'utilisateur d'entrer la date de vérification et un nom de vérificateur.
